# EUROPEAN PATENT APPLICATION

(11) **EP 4 451 232 A1**
(43) Date of publication of application: **23.10.2024**
(21) Application number: 24170528.4
(22) Date of filing: 16.04.2024
(51) Int. Cl.: G06V 10/82, G06V 20/00

(54) **SCENE RECOGNITION METHOD, METHOD FOR OBTAINING SCENE DATA, DEVICE, MEDIUM, AND VEHICLE**

(30) Priority: 17.04.2023 CN 202310424526
(71) Applicant: Anhui NIO Autonomous Driving Technology Co., Ltd., Hefei, Anhui 230601 (CN)
(72) Inventor: Wang, Xiaolian, Hefei, 230601 (CN); Ren, Shaoqing, Hefei, 230601 (CN)
(74) Representative: Vossius & Partner Patentanwälte Rechtsanwälte mbB

(57) **Abstract**

The disclosure relates to the field of image recognition technologies, and specifically provides a scene recognition method, a method for obtaining scene data, a device, a medium, and a vehicle, to resolve technical problems of low scene recognition efficiency and low recognition precision of an existing scene recognition method. The scene recognition method of the disclosure includes: obtaining an image to be recognized and at least one object image; constructing and training an object detection model; and recognizing a current scene based on the object detection model, the image to be recognized, and the at least one object image, to obtain a scene recognition result. In this way, any scene can be quickly recognized, and a scene recognition result with high precision can be obtained.

## Description

The present application claims priority of CN patent application 202310424526.1 filed on April 17, 2023 with the title "Scene recognition method, method for obtaining scene data, device, medium, and vehicle".

### Technical Field

The disclosure relates to the field of image recognition technologies, and specifically provides a scene recognition method, a method for obtaining scene data, a device, a medium, and a vehicle.

### Background Art

A problem to be resolved through visual scene recognition is to enable a human or a robot to determine a specific scene given an image of the scene. Visual scene recognition is widely used in the fields of mobile robots, autonomous driving, and the like.

An existing scene recognition method supports only recognition of scenes of a fixed class. When a new scene requirement is added, scene recognition needs to be manually performed. However, manual recognition leads to high costs, low scene recognition efficiency, and low recognition precision.

Accordingly, there is a need in the art for a new solution to resolve the above problems.

### Summary

To overcome the above disadvantages, the disclosure is provided to resolve or at least partially resolve the above technical problems. The disclosure provides a scene recognition method, a method for obtaining scene data, a device, a medium, and a vehicle.

According to a first aspect, the disclosure provides a scene recognition method. The method includes: obtaining an image to be recognized and at least one object image; constructing and training an object detection model; and recognizing a current scene based on the object detection model, the image to be recognized, and the at least one object image, to obtain a scene recognition result.

In an implementation, the object detection model includes:
a backbone network, for separately extracting a first generic feature of the image to be recognized and a second generic feature of the at least one object image;
a feature pyramid network, for obtaining a first feature map and a second feature map based on the first generic feature and the second generic feature, respectively;
a convolutional network, for performing a convolution operation on the first feature map and the second feature map; and
a prediction network, for classifying and locating based on a convolution operation result, to obtain a detection result.

In an implementation, the recognizing a current scene based on the object detection model, the image to be recognized, and the at least one object image, to obtain a scene recognition result includes: separately inputting the image to be recognized and the at least one object image into the object detection model, to obtain a detection result; and determining the scene recognition result based on the detection result.

In an implementation, the detection result includes an object probability of at least one detection object. The determining the scene recognition result based on the detection result includes: determining whether the object probability meets a first preset condition; if the object probability meets the first preset condition, determining whether a quantity of detection objects that meet the first preset condition meets a second preset condition; and if the quantity of detection objects that meet the first preset condition meets the second preset condition, determining the scene recognition result based on the detection objects that meet the second preset condition.

In an implementation, the object image includes any one of a cone barrel image, a safety barrel image, a construction signboard image, and a diversion signboard image. The separately inputting the image to be recognized and the at least one object image into the object detection model, to obtain an object detection result includes: inputting the image to be recognized into the object detection model, and inputting at least two of the cone barrel image, the safety barrel image, the construction signboard image, and the diversion signboard image into the object detection model, to obtain the object detection result.

In an implementation, the detection result includes object probabilities of at least two detection objects in a cone barrel, a safety barrel, a construction signboard, and a diversion signboard. The determining the scene recognition result based on the detection result includes: determining whether the object probabilities of the at least two detection objects of the cone barrel, the safety barrel, the construction signboard, and the diversion signboard meet a first preset condition; if the object probabilities of the at least two detection objects of the cone barrel, the safety barrel, the construction signboard, and the diversion signboard meet the first preset condition, determining whether a quantity of detection objects that meet the first preset condition meets a second preset condition; and if the quantity of detection objects that meet the first preset condition meets the second preset condition, determining, based on the at least two detection objects of the cone barrel, the safety barrel, the construction signboard, and the diversion signboard, that the current scene is a construction scene.

According to a second aspect, the disclosure provides a method for obtaining scene data. The method includes: performing scene recognition according to the above scene recognition method, to obtain a scene recognition result; and obtaining scene data in a current scene based on the scene recognition result.

According to a third aspect, an electronic device is provided. The electronic device includes at least one processor and at least one storage apparatus, the storage apparatus is configured to store a plurality of program codes, wherein the program codes are adapted to be loaded and executed by the at least one processor to perform the scene recognition method or the method for obtaining scene data described in any of the above items.

According to a fourth aspect, a computer-readable storage medium is provided. The computer-readable storage medium stores a plurality of program codes, wherein the program codes are adapted to be loaded and executed by the at least one processor to perform the scene recognition method or the method for obtaining scene data described in any of the above items.

According to a fifth aspect, a vehicle is provided. The vehicle includes a vehicle body, at least one processor, and at least one storage apparatus. The storage apparatus is configured to store a plurality of program codes, wherein the program codes are adapted to be loaded and executed by the at least one processor to perform the above scene recognition method or the method for obtaining scene data.

The one or more technical solutions of the disclosure described above have at least one or more of the following beneficial effects:
The scene recognition method of the disclosure includes: obtaining an image to be recognized and at least one object image; constructing and training an object detection model; and recognizing a current scene based on the object detection model, the image to be recognized, and the at least one object image, to obtain a scene recognition result. In this way, any scene can be quickly recognized, and a scene recognition result with high precision can be obtained.

### Brief Description of the Drawings

The disclosed content of the disclosure will become more readily understood with reference to the accompanying drawings. A person skilled in the art readily understands that: These accompanying drawings are merely for illustrative purposes and are not intended to limit the protection scope of the disclosure. In addition, similar numbers in the figures are used to represent similar components, in which:
FIG. 1 is a schematic flowchart of main steps of a scene recognition method according to an embodiment of the disclosure;
FIG. 2 is a schematic diagram of a structure of an object detection model according to an embodiment;
FIG. 3 is a schematic flowchart of recognizing a current scene based on an object detection model, an image to be recognized, and at least one object image, to obtain a scene recognition result according to an embodiment;
FIG. 4 is a complete schematic flowchart of a scene recognition method according to an embodiment;
FIG. 5 is a schematic flowchart of a method for obtaining scene data according to an embodiment; and
FIG. 6 is a schematic diagram of a structure of an electronic device according to an embodiment.

### Detailed Description of Embodiments

Some implementations of the disclosure are described below with reference to the accompanying drawings. A person skilled in the art should understand that these implementations are merely used to explain the technical principles of the disclosure, and are not intended to limit the protection scope of the disclosure.

In the description of the disclosure, a "module" or "processor" may include hardware, software, or a combination thereof. A module may include a hardware circuit, various suitable sensors, a communication port, and a memory, may include a software part, for example, program code, or may be a combination of software and hardware. The processor may be a central processing unit, a microprocessor, a graphics processing unit, a digital signal processor, or any other suitable processor. The processor has a data and/or signal processing function. The processor may be implemented in software, hardware, or a combination thereof. A non-transitory computer-readable storage medium includes any suitable medium that can store program code, for example, a magnetic disk, a hard disk, an optical disc, a flash memory, a read-only memory, or a random access memory. The term "A and/or B" indicates all possible combinations of A and B, for example, only A, only B, or A and B. The term "at least one A or B" or "at least one of A and B" has a meaning similar to "A and/or B" and may include only A, only B, or A and B. The terms "a/an" and "this" in the singular form may also include the plural form.

Currently, a conventional scene recognition method supports only recognition of scenes of a fixed class. When a new scene requirement is added, scene recognition needs to be manually performed. However, manual recognition leads to high costs, low scene recognition efficiency, and low recognition precision.

Therefore, the disclosure provides a scene recognition method, a method for obtaining scene data, an electronic device, and a storage medium. The method of the disclosure sets no limitation on a class of a scene to be recognized, provided that the scene can be represented by one or more object elements in the scene. The method specifically includes: obtaining an image to be recognized and at least one object image; constructing and training an object detection model; and recognizing a current scene based on the object detection model, the image to be recognized, and the at least one object image, to obtain a scene recognition result. In this way, any scene can be quickly recognized by using the method, and a scene recognition result with high precision can be obtained.

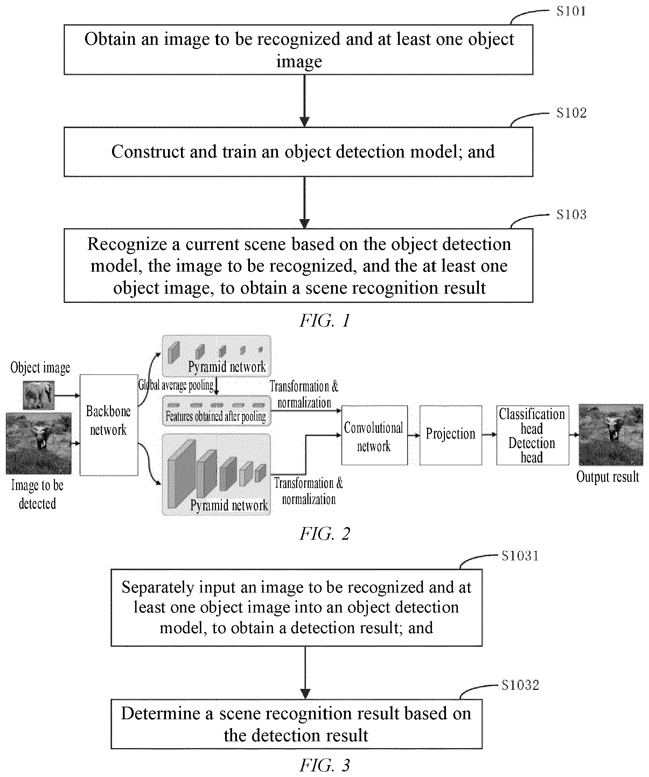

Referring to FIG. 1, FIG. 1 is a schematic flowchart of main steps of a scene recognition method according to an embodiment of the disclosure.

As shown in FIG. 1, the scene recognition method in this embodiment of the disclosure mainly includes the following step S 101 to step S 103.

Step S101: Obtain an image to be recognized and at least one object image.

An object is a common object element in a current scene. For example, in a construction scene, an object may be a cone barrel, a safety barrel, a construction signboard, a diversion signboard, or the like.

The object image is a template image of the common object element in the current scene. For example, in the construction scene, the object image may be a cone barrel image, a safety barrel image, a construction signboard image, a diversion signboard image, or the like.

The image to be recognized may be one or more images captured from a video (for example, a video acquired by a vehicle sensor).

It should be noted that a quantity of object images is not limited, and the quantity of object images is specifically determined based on a scene that actually needs to be recognized. For example, it is difficult to determine that the current scene is a construction scene when only one object of the cone barrel, the safety barrel, the construction signboard, and the diversion signboard exists. Only when at least two objects of the cone barrel, the safety barrel, the construction signboard, and the diversion signboard are included, it can be determined that the current scene is a construction scene.

Step S102: Construct and train an object detection model.

Step S103: Recognize a current scene based on the object detection model, the image to be recognized, and the at least one object image, to obtain a scene recognition result.

Specifically, the object detection model is used to recognize, based on the at least one object image, the current scene in which the image to be recognized is located, to obtain the scene recognition result.

Based on the foregoing step S101 to step S103, the method includes: obtaining an image to be recognized and at least one object image; constructing and training an object detection model; and recognizing a current scene based on the object detection model, the image to be recognized, and the at least one object image, to obtain a scene recognition result. In this way, any scene can be quickly recognized, and a scene recognition result with high precision can be obtained.

The step S102 and step S 103 are further separately described below.

Step S102 is first described in detail.

In a specific implementation, the object detection model includes a backbone network, a feature pyramid network, a convolutional network, and a prediction network that are connected in sequence.

The backbone network is for separately extracting a first generic feature of the image to be recognized and a second generic feature of the at least one object image.

Generic features include an outline, a texture, a color, a position, and the like of a detection object.

In an embodiment, a ResNet50 network may be used as an example of the backbone network, but the backbone network is not limited thereto.

The feature pyramid network (FPN) is for obtaining a first feature map and a second feature map based on the first generic feature and the second generic feature, respectively.

The FPN performs upward sampling on a lowest-level feature, and fuses a sampling result with a lower-level feature, to obtain a high-resolution and strong-semantic feature map (that is, feature extraction is enhanced).

The convolutional network is for performing a convolution operation on the first feature map and the second feature map.

Specifically, a function of the convolutional network is to perform the convolution operation on the first feature map and the second feature map that are output by the FPN, such that an image to be detected and the object image interact with each other, thereby improving feature saliency of similar positions of the image to be detected and the object image, and suppressing feature saliency of dissimilar positions.

In an embodiment, a convolutional layer of Conv1x1 may be used as an example of the convolutional network, but the convolutional network is not limited thereto.

The prediction network includes a classification head and a detection head, and is for classifying and locating based on a convolution operation result, to obtain a detection result.

The classification head can predict class information of the detection object, the detection head can predict bounding box information of the detection object, and the classification head and the detection head may be specifically implemented by using two convolutional layers.

In another specific implementation, the object detection model further includes a projection. The projection is connected between the convolutional network and the detection head. The projection is configured to project the convolution operation result to a standard feature of a preset format.

Specifically, the projection may be further connected between the convolutional network of the object detection model and the detection head, to transform a feature output by the convolutional network into a preset format.

After the object detection model is constructed, the object detection model is further trained based on a sample training set by using a gradient descent method, until the object detection model converges, to obtain a trained object detection model.

For example, specifically, as shown in FIG. 2, inputs of the object detection model are respectively the image to be detected and the object image, and the quantity of object images is not limited. Respective generic features of the two types of images are extracted by using the shared backbone network to respectively obtain the first generic feature and the second generic feature. Then, the FPN separately extracts the first feature map corresponding to the first generic feature and the second feature map corresponding to the second generic feature, where the feature map is multi-scale, as shown in the figure, a layer quantity of a multi-scale feature map is 5. After global average pooling is performed on a two-dimensional multi-scale feature map of the object image, five feature vectors (for example, 1x1x256 dimensions) are output, and then normalized after a series of fully-connected transformations, and a result is used as a convolution kernel of a Conv1x1 convolution operation. An output multi-scale feature map of the image to be detected is also normalized after a series of convolution transformations, and a result is used as an input feature of the Conv1x1 convolution operation. The image to be detected and the object image interact with each other through Conv1x1 convolution, such that the feature saliency of the similar positions of the image to be detected and the object image is improved, and the feature saliency of the dissimilar positions is suppressed. Then, an output feature of Conv1x1 convolution is projected to hidden space through a series of convolution transformations (projection). Finally, the feature in the hidden space is decoded by classification and the detection header by using a series of convolution operations, to obtain a similarity probability (an object probability) of the detection object in the image to be detected with respect to the object image and a detection box.

Step S102 is further described above, and step S 103 is further described below.

Specifically, as shown in FIG. 3, step S103 may be implemented by using the following step S 1031 and step S1032.

Step S 1031: Separately input the image to be recognized and the at least one object image into the object detection model, to obtain a detection result.

Specifically, the image to be recognized and the at least one object image are simultaneously input into the object detection model, to obtain the detection result.

In a specific implementation, the object image includes any one of a cone barrel image, a safety barrel image, a construction signboard image, and a diversion signboard image. The separately inputting the image to be recognized and the at least one object image into the object detection model, to obtain an object detection result includes: inputting the image to be recognized into the object detection model, and inputting at least two of the cone barrel image, the safety barrel image, the construction signboard image, and the diversion signboard image into the object detection model, to obtain the object detection result.

Specifically, a construction scene that needs to be recognized is used as an example. Any two of object images (for example, the cone barrel image, the safety barrel image, the construction signboard image, and the diversion signboard image) in the construction scene are input into the object detection model, and the image to be recognized is input into the object detection model, to output the detection result. The detection result includes object probabilities and detection boxes of at least two detection objects in the image to be detected, where the object probability is a similarity probability of the detection object in the image to be detected with respect to the object image.

Step S 1032: Determine the scene recognition result based on the detection result.

In a specific implementation, the detection result includes an object probability of at least one detection object. The determining the scene recognition result based on the detection result includes: determining whether the object probability meets a first preset condition; if the object probability meets the first preset condition, determining whether a quantity of detection objects that meet the first preset condition meets a second preset condition; and if the quantity of detection objects that meet the first preset condition meets the second preset condition, determining the scene recognition result based on the detection objects that meet the second preset condition.

Specifically, after the detection result is obtained, it is determined whether all object probabilities in the detection result meet the first preset condition; if all the object probabilities in the detection result meet the first preset condition, it is continued to determine whether the quantity of detection objects that meet the first preset condition meets the second preset condition; and if the quantity of detection objects that meet the first preset condition meets the second preset condition, the scene recognition result corresponding to the image to be recognized is determined based on the detection objects that meet the second preset condition.

The first preset condition may be determining whether the object probability is greater than a probability threshold, and the probability threshold may be a probability value obtained in advance through experiment. For example, 0.3 may be used as an example of the probability threshold.

The second preset condition may be determining whether the quantity of detection objects that meet the first preset condition is greater than a preset threshold, and the preset threshold may be a value obtained in advance through experiment.

In a preferred implementation, the detection result includes object probabilities of at least two detection objects in a cone, a safety barrel, a construction signboard, and a diversion signboard. The determining the scene recognition result based on the detection result includes: determining whether the object probabilities of the at least two detection objects of the cone barrel, the safety barrel, the construction signboard, and the diversion signboard meet a first preset condition; if the object probabilities of the at least two detection objects of the cone barrel, the safety barrel, the construction signboard, and the diversion signboard meet the first preset condition, determining whether a quantity of detection objects that meet the first preset condition meets a second preset condition; and if the quantity of detection objects that meet the first preset condition meets the second preset condition, determining, based on the at least two detection objects of the cone barrel, the safety barrel, the construction signboard, and the diversion signboard, that the current scene is a construction scene.

Specifically, after the detection result is obtained, it is first determined whether object probabilities of all detection objects (for example, the at least two detection objects of the cone barrel, the safety barrel, the construction signboard, and the diversion signboard) in the detection result are greater than a preset value; if the object probabilities of all the detection objects in the detection result are greater than the preset value, it is continued to determine whether a quantity of detection objects whose object probabilities are greater than the probability threshold is greater than a preset value; and if the quantity of detection objects whose object probabilities are greater than the probability threshold is greater than the preset value, it is determined, based on the at least two detection objects of the cone barrel, the safety barrel, the construction signboard, and the diversion signboard, that the current scene corresponding to the image to be recognized is a construction scene.

In this way, any scene can be recognized. When a new scene needs to be recognized, manual recognition is not required, and a new object detection model does not need to be re-trained. Only an object image in the new scene needs to be added, thereby improving scene recognition efficiency and recognition precision, and improving system security and stability.

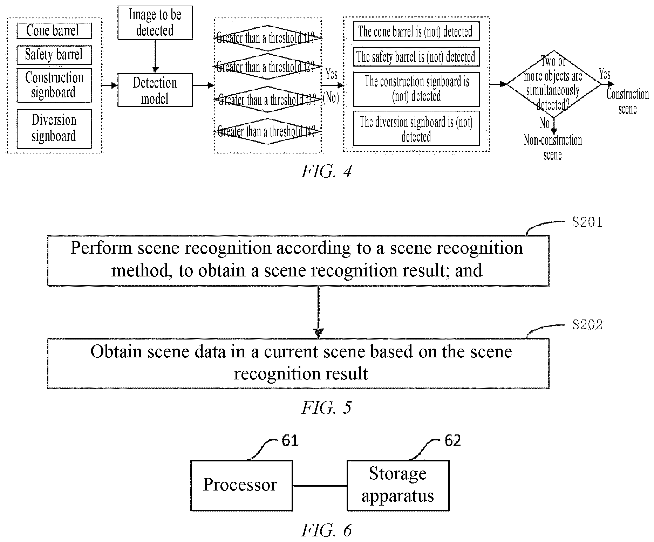

Specifically, as shown in FIG. 4, the construction scene is used as an example. Common object elements in the construction scene are the cone, the safety barrel, the construction signboard, the diversion signboard, and the like. Several object images (for example, one object image) are prepared for each scene element, and are sent to the object detection model to determine whether these objects in the object image exist in the image to be detected. When the object probability in the detection result is greater than a corresponding probability threshold (for example, 0.3), it is considered that an object element exists in the image to be detected. Then, according to a combination rule, that is, two or more detection objects are simultaneously detected, it is considered that the current scene is the construction scene.

In this way, if a specific scene can be represented by a common object element in the specific scene, any scene can be recognized by only replacing an input object image. In addition, the object detection model detects an object based on a similarity between the object image and the detection object in the image to be recognized, which is not related to a class. Therefore, any scene can be detected.

It should be noted that, although the steps are described in a particular sequence in the above embodiments, a person skilled in the art may understand that, to implement the effects of the disclosure, different steps are not necessarily performed in such a sequence, and the steps may be performed simultaneously (in parallel) or in another sequence. These changes fall within the protection scope of the disclosure.

For tasks such as visual perception and path planning in autonomous driving, long-tailed training data is important for improving generalization performance and stability of a model. In addition to a common individual-level long-tailed object, there are long-tailed scenes such as a construction scene, a land collapse scene, and a traffic accident scene. In an existing solution, a road collection vehicle is usually used to collect such data in a multi-event area, and manpower costs are high. Therefore, how to efficiently use mass data of mass-produced vehicles to quickly and accurately mine object scene data is an extremely important problem.

Further, the disclosure further provides a method for obtaining scene data.

As shown in FIG. 5, the scene recognition method in this embodiment of the disclosure mainly includes the following step S201 and step S202.

Step S201: Perform scene recognition according to the above scene recognition method, to obtain a scene recognition result.

For a specific process of this step, refer to the above embodiment. Details are not described herein again.

Step S202: Obtain scene data in a current scene based on the scene recognition result.

After a specific scene of the current scene is recognized, for example, a construction scene, the scene data in the current scene may be obtained or acquired.

To mine data in a particular scene, data mining is decomposed into detection for a plurality of common objects in the scene, and a corresponding trigger rule is designed. Once a detection result meets a trigger condition, data collection is started and data is recovered. When a scene data collection requirement changes, only the object image and the trigger rule (for example, logic in step S1032) need to be changed, such that an existing model can be multiplexed without re-training. In this way, efficiency and precision of obtaining scene data are improved.

In addition, different detection thresholds may be designed based on different object elements to balance a recall and a precision of the model. To ensure an enough recall, the detection threshold may be appropriately reduced, and a false detection scene may be filtered out according to a combination rule. For example, the combination rule is designed as that data collection can be triggered when two or more objects are simultaneously detected, thereby avoiding false detection for a single object. In addition, presence of only a cone does not necessarily indicate the construction scene. Therefore, a rule needs to be designed based on actual requirements, and the rule determines accuracy of scene mining to some extent.

A person skilled in the art may understand that all or some of the procedures in the methods in the above embodiments of the disclosure may be implemented by using a computer program instructing related hardware. The computer program may be stored in a computer-readable storage medium. When the computer program is executed by a processor, the steps in the above method embodiments may be implemented. The computer program includes computer program code, and the computer program code may be in a source code form, an object code form, a form of an executable file, some intermediate forms, or the like. The computer-readable storage medium may include: any entity or apparatus that can carry the computer program code, a medium, a USB flash drive, a removable hard disk, a magnetic disk, an optical disc, a computer memory, a read-only memory, a random access memory, an electric carrier signal, a telecommunications signal, a software distribution medium, and the like. It should be noted that the content included in the computer-readable storage medium may be appropriately added or deleted depending on requirements of the legislation and patent practice in a jurisdiction. For example, in some jurisdictions, according to the legislation and patent practice, the computer-readable storage medium does not include an electric carrier signal and a telecommunications signal.

Further, the disclosure further provides an electronic device. In the electronic device embodiment according to the disclosure, as shown in FIG. 6, the electronic device includes at least one processor 61 and at least one storage apparatus 62. The storage apparatus may be configured to store a program for performing the scene recognition method or the method for obtaining scene data in the above method embodiment. The processor may be configured to execute the program in the storage apparatus. The program includes but is not limited to a program for performing the scene recognition method or the method for obtaining scene data in the above method embodiment. For ease of description, only parts related to the embodiments of the disclosure are shown. For specific technical details that are not disclosed, refer to the method part of the embodiments of the disclosure.

In this embodiment of the disclosure, the electronic device may be a control apparatus device formed by various devices. In some possible implementations, the electronic device may include a plurality of storage apparatuses and a plurality of processors. The program for performing the scene recognition method or the method for obtaining scene data in the above method embodiment may be divided into a plurality of segments of subprograms, and the subprograms may be separately loaded and run by the processor to perform different steps of the scene recognition method or the method for obtaining scene data in the above method embodiment. Specifically, the subprograms may be separately stored in different storage apparatuses. Each processor may be configured to execute the program in one or more storage apparatuses, to jointly implement the scene recognition method or the method for obtaining scene data in the above method embodiment. That is, each processor separately performs different steps of the scene recognition method or the method for obtaining scene data in the above method embodiment, to jointly implement the scene recognition method or the method for obtaining scene data in the above method embodiment.

The plurality of processors may be processors deployed on a same device. For example, the electronic device may be a high-performance device including a plurality of processors, and the plurality of processors may be processors configured on the high-performance device. In addition, the plurality of processors may alternatively be processors deployed on different devices. For example, the electronic device may be a server cluster, and the plurality of processors may be processors on different servers in the server cluster.

Further, the disclosure further provides a computer-readable storage medium. In the computer-readable storage medium embodiment according to the disclosure, the computer-readable storage medium may be configured to store a program for performing the scene recognition method or the method for obtaining scene data in the above method embodiment, and the program may be loaded and run by a processor to implement the above scene recognition method or the method for obtaining scene data. For ease of description, only parts related to the embodiments of the disclosure are shown. For specific technical details that are not disclosed, refer to the method part of the embodiments of the disclosure. The computer-readable storage medium may be a storage apparatus device formed by various electronic devices. Optionally, the computer-readable storage medium in this embodiment of the disclosure is a non-transitory computer-readable storage medium.

Further, the disclosure further provides a vehicle. The vehicle includes a vehicle body, at least one processor, and at least one storage apparatus, where the storage apparatus is configured to store a plurality of program codes, wherein the program codes are adapted to be loaded and executed by the at least one processor to perform the above scene recognition method or the method for obtaining scene data.

Heretofore, the technical solutions of the disclosure have been described with reference to the preferred implementations shown in the accompanying drawings. However, a person skilled in the art readily understands that the protection scope of the disclosure is obviously not limited to these specific implementations. Without departing from the principles of the disclosure, a person skilled in the art may make equivalent changes or replacements to related technical features. The technical solutions obtained after these changes or replacements fall within the protection scope of the disclosure.

## Claims

1. A scene recognition method, wherein the method comprises:
obtaining an image to be recognized and at least one object image;
constructing and training an object detection model; and
recognizing a current scene based on the object detection model, the image to be recognized, and the at least one object image, to obtain a scene recognition result.

2. The scene recognition method according to claim 1, wherein the object detection model comprises:
a backbone network for separately extracting a first generic feature of the image to be recognized and a second generic feature of the at least one object image;
a feature pyramid network for obtaining a first feature map and a second feature map based on the first generic feature and the second generic feature, respectively;
a convolutional network for performing a convolution operation on the first feature map and the second feature map; and
a prediction network for classifying and locating based on a convolution operation result, to obtain a detection result.

3. The scene recognition method according to claim 1 or 2, wherein the recognizing a current scene based on the object detection model, the image to be recognized, and the at least one object image, to obtain a scene recognition result comprises:
separately inputting the image to be recognized and the at least one object image into the object detection model, to obtain a detection result; and
determining the scene recognition result based on the detection result.

4. The scene recognition method according to claim 3, wherein the detection result comprises an object probability of at least one detection object; and
the determining the scene recognition result based on the detection result comprises:
determining whether the object probability meets a first preset condition;
if the object probability meets the first preset condition, determining whether a quantity of detection objects that meet the first preset condition meets a second preset condition; and
if the quantity of detection objects that meet the first preset condition meets the second preset condition, determining the scene recognition result based on the detection objects that meet the second preset condition.

5. The scene recognition method according to any one of claims to 4, wherein the object image comprises any one of a cone barrel image, a safety barrel image, a construction signboard image, and a diversion signboard image; and
the separately inputting the image to be recognized and the at least one object image into the object detection model, to obtain an object detection result comprises: inputting the image to be recognized into the object detection model, and inputting at least two of the cone barrel image, the safety barrel image, the construction signboard image, and the diversion signboard image into the object detection model, to obtain the object detection result.

6. The scene recognition method according to claim 5, wherein the detection result comprises object probabilities of at least two detection objects of a cone barrel, a safety barrel, a construction signboard, and a diversion signboard; and
the determining the scene recognition result based on the detection result comprises:
determining whether the object probabilities of the at least two detection objects of the cone barrel, the safety barrel, the construction signboard, and the diversion signboard meet a first preset condition;
if the object probabilities meet the first preset condition, determining whether a quantity of detection objects that meet the first preset condition meets a second preset condition; and
if the quantity of detection objects that meet the first preset condition meets the second preset condition, determining, based on the at least two detection objects of the cone barrel, the safety barrel, the construction signboard, and the diversion signboard, that the current scene is a construction scene.

7. A method for obtaining scene data, wherein the method comprises:
performing scene recognition according to the scene recognition method according to any one of claims 1 to 6, to obtain a scene recognition result; and
obtaining scene data in a current scene based on the scene recognition result.

8. An electronic device, comprising at least one processor and at least one storage apparatus, wherein the storage apparatus is configured to store a plurality of program codes, wherein the program codes are adapted to be loaded and executed by the at least one processor to perform the scene recognition method according to any one of claims 1 to 6 or the method for obtaining scene data according to claim 7.

9. A computer-readable storage medium, storing a plurality of program codes, wherein the program codes are adapted to be loaded and executed by at least one processor to perform the scene recognition method according to any one of claims 1 to 6 or the method for obtaining scene data according to claim 7.

10. A vehicle, wherein the vehicle comprises a vehicle body, at least one processor, and at least one storage apparatus, the storage apparatus is configured to store a plurality of program codes, wherein the program codes are adapted to be loaded and executed by the at least one processor to perform the scene recognition method according to any one of claims 1 to 6 or the method for obtaining scene data according to claim 7.
